# EUROPÄISCHE PATENTSCHRIFT

(11) **EP 1 915 326 B1**
(45) Veröffentlichungstag und Bekanntmachung des Hinweises auf die Patenterteilung: **06.04.2016**
(21) Anmeldenummer: 06795231.7
(22) Anmeldetag: 11.08.2006
(51) Int. Cl.: C04B 7/36, C04B 7/44, F23G 7/06, F23G 5/46

(54) **VERFAHREN UND VORRICHTUNG ZUM ENTFERNEN VON FLÜCHTIGEN ORGANISCHEN KOMPONENTEN AUS ABGASEN EINER ZEMENTKLINEROFENANLAGE**
METHOD AND DEVICE FOR REMOVING VOLATILE ORGANIC COMPONENTS FROM WASTE GASES OF A CLINKER INSTALLATION
PROCEDE ET DISPOSITIF POUR ELIMINER DES COMPOSANTS ORGANIQUES VOLATILS CONTENUS DANS DES GAZ BRULES D'UNE INSTALLATION DE CLINKER

(30) Priorität: 11.08.2005 AT 13562005
(43) Veröffentlichungstag der Anmeldung: 30.04.2008
(73) Patentinhaber: Holcim Technology Ltd., 8645 Jona (CH)
(72) Erfinder: GASSER, Urs, CH-5235 Rüfenach, CH (CH)
(74) Vertreter: Keschmann, Marc
(86) Internationale Anmeldenummer: PCT/IB2006/002192
(87) Internationale Veröffentlichungsnummer: WO 2007/017746

(56) Entgegenhaltungen:
- EP-A- 1 219 336
- DE-A1- 3 523 677
- US-A- 5 365 866
- US-A1- 2003 056 935

## Beschreibung

Die Erfindung bezieht sich auf ein Verfahren und eine Vorrichtung zum Entfernen von flüchtigen organischen Komponenten (VOC) aus Abgasen einer Zementklinkerofenanlage, bei welchem die weitgehend abgekühlten Abgase einer Nachverbrennung unterworfen werden.

Die DE 101 46 418 A1 zeigt und beschreibt ein Verfahren, bei welchem volatile organische Komponenten (VOC) durch Nachverbrennung abgebaut werden. Bei der Herstellung von Zementklinker aus Zementrohmehl kann es durchaus vorkommen, dass Rohmaterialien eingesetzt werden, welche nicht nur sulfidhaltig sind und daher zu einer entsprechenden Schwefelbelastung des Abgases führen können, sondern auch einen erhöhten TOC-Gehalt (total organic carbon) aufweisen. Bei modernen Klinkeranlagen wird das Rohmehl in mehrstufigen Vorerhitzern und insbesondere in Zyklonstufen eines Wärmetauscherstranges vorerhitzt, wobei das Rohmehl in den Zyklonstufen im Schwebezustand gehalten wird. Zu diesem Zweck wird heißes Abgas aus dem Drehrohrofen abgesaugt und durch die Zyklonstufen hindurchgezogen, wobei die heißen Abgase in den einzelnen Stufen abgekühlt werden und im Gegenzug das zugeführte Rohmehl erwärmt wird. Insbesondere in den oberen Zyklonstufen kann bei entsprechendem Rohmehl mit einem erhöhten TOC-Gehalt bereits ein nicht unerheblicher Anteil volatiler organischer Substanzen bzw. VOC ausgetrieben werden und gelangt in der Folge unkontrolliert in die Abgase, ohne zu verbrennen. Die DE 101 46 418 A1 hat nun hier vorgeschlagen, in die Abgasleitung in Gasströmungsrichtung hinter dem Wärmetauscherstrang eine Oxidationszone mit Nachbrennern zu installieren, durch deren offene Flammen das Abgas zwangsweise geführt und dabei wirkungsvoll oxidiert werden soll. Eine derartige Einrichtung setzt voraus, dass die an dieser Stelle bereits zumeist deutlich abgekühlten und bis auf die flüchtigen organischen Komponenten weitestgehend ausgebrannten Gase von Temperaturen von etwa 300° C wiederum auf 900° C erhitzt werden, um die Verbrennung der flüchtigen organischen Komponenten sicherzustellen. Bei anderen Konzepten muss sogar das gesamte Prozessgas nach der Rohmühle samt Wasserdampf und Falschluft von etwa 100° C auf 900° erhitzt werden. Da bei dieser Anordnung die gesamte aus dem Drehrohrofen abgezogene Gasmenge neuerlich aufgeheizt werden muss, ist hier ein großer Energieeinsatz erforderlich, wobei das entstandene heiße Abgas in der Folge wiederum nur für Vorwärmzwecke, beispielsweise in einer Mahltrocknungsanlage, eingesetzt werden kann.

Die US 5 365 866 A offenbart ein Verfahren und eine Vorrichtung zur Behandlung von Abgasen, die im Zuge eines Verbrennungsprozesses in einem Zementofen entstehen. Hierbei wird ein Teil der Abgase innerhalb eines Bypassabschnitts auf eine bestimmte Temperatur, welche höher als die Ausgangstemperatur ist, erhitzt, wobei die erhitzten Abgase innerhalb des Bypassabschnitts auf eben dieser zweiten Temperatur gehalten werden, um die erwünschte Menge an verbleibenden gefährlichen organischen Verbindungen unschädlich zu machen. Anschließend werden die erhitzten Abgase auf eine dritte Temperatur, welche niedriger als die Ausgangstemperatur ist, gekühlt.

Die latente Wärme von heißen Gasen kann naturgemäß auf verschiedene Weise genutzt werden. Bei Gasturbinen und insbesondere Dampfturbinen zum Betrieb von elektrischen Generatoren muss die Erzeugung heißer Abgase zur Erzeugung überhitzten Dampfes in Wärmetauschern genau geplant werden, da derartige Dampfturbinen einen definierten Strom an Dampf für einen effizienten Betrieb voraussetzen. Um eine entsprechend gute Wirtschaftlichkeit sicherzustellen, muss daher eine entsprechend große Menge an heißen Verbrennungsabgasen bereitgestellt werden, wie sie üblicherweise nur durch unmittelbares Verfeuern von hochwertigen Brennstoffen gewährleistet werden kann. Die bloße Erhitzung großer Mengen an Gasen, welche selbst nur sehr geringen Brennwert aufweisen, wäre für den Betrieb eines derartigen Dampferzeugers zumeist als unwirtschaftlich einzustufen, sodass die latente Wärme bisher in mehr oder minder unkontrollierter weise anfallend abgebaut wurde.

Die Erfindung zielt nun darauf ab, die Vorteile einer Energierückgewinnung in einer Dampfturbine gemeinsam mit einer entsprechenden Reduktion der VOCs im Abgas zu nutzen. Zu diesem zweck wird im Rahmen des erfindungsgemäßen Verfahrens so vorgegangen, dass eine Nachverbrennung in dem Ausmaß vorgenommen wird, welche eine Absenkung der Konzentration der VOC unter die zulässigen Grenzwerte sicherstellt, und dass die Nachverbrennung zur Dampferzeugung vorgenommen wird, wobei die Dampferzeugung in der Nachverbrennung auf ein nachzuverbrennendes Gasvolumen ausgelegt ist, welches sicherstellt, dass eine diesem Gasvolumen entsprechende Teilmenge des Abgases die Absenkung von in der Zeiteinheit emittierten VOC im Abgas unter die zulässigen Konzentrationswerte durch Verdünnung erzielen lässt und wobei diese Teilmenge gleichzeitig auf die Erzeugung einer für den wirtschaftlichen Betrieb einer bestimmten Dampfturbine ausreichende Dampfmenge ausgelegt ist. Bedingt durch den Umstand, dass für den wirtschaftlichen Betrieb einer bestimmten Dampfturbine exakte Parameter einzuhalten sind, ist erfindungsgemäß eine entsprechende Dimensionierung der zueinander passenden Aggregate vorgesehen. Die Dampfturbine ist somit nicht auf eine vollständige Erhitzung der gesamten Abgasmenge des Drehrohrofens ausgelegt, da dies einer überflüssigen Erhitzung großer Mengen von mehr oder weniger inerten Gasen gleichkommt und damit nur geringe Wirtschaftlichkeit aufweisen würde. Vielmehr wird erfindungsgemäß die Dampfturbine so dimensioniert, dass sie mit geringeren Mengen als der vollständigen Abgasmenge das Auslangen findet, wobei hier wiederum der Grenzwert so gezogen wird, dass eine Teilmenge aus dem Abgasstrom abgezweigt wird, welche jeweils sicherstellt, dass nach dem vollständigen Verbrennen volatiler Komponenten in dieser Teilmenge die Gesamtmenge der in der Folge in der Zeiteinheit freigesetzten VOCs unter den jeweiligen gesetzlichen Grenzwerten bleibt. Der Umstand, dass eben nicht die Gesamtmenge an weitestgehend inerten Gasen für die Dampferzeugung wieder aufgewärmt werden muss, um den VOC-Gehalt abzusenken, erhöht die Wirtschaftlichkeit des Verfahrens wesentlich, da es nunmehr genügt, genau diejenige Menge an mehr oder minder inerten Gasen zu erhitzen, bei deren Erhitzung wiederum genau diejenige Menge an VOCs verbrannt wird, welche in Summe eine Freisetzung von zulässigen Mengen an VOCs in der Zeiteinheit ergibt. Gleichzeitig ist diese Teilmenge nun auf die Bedürfnisse der nachfolgenden Dampfturbine optimal abgestimmt, sodass insgesamt eine wirtschaftliche Verfahrensweise möglich wird.

Die erfindungsgemäße Vorrichtung zum Entfernen von flüchtigen organischen Komponenten aus Abgasen einer Zementklinkerofenanlage, bei welcher die weitgehend abgekühlten Abgase einer Nachverbrennung unterworfen sind, ist im wesentlichen dadurch gekennzeichnet, dass an die Abgasleitung der Zementklinkerofenanlage zwischen dem Vorerhitzer und dem Abgassauggebläse eine Zweigleitung angeschlossen ist, an welche eine Brennkammer für einen Wärmetauscher zur Dampferzeugung und eine Dampfturbine angeschlossen sind. Die Vorerhitzer bei modernen Zementklinkerofenanlagen sind, wie bereits erwähnt, als Schwebezyklonwärmetauscher ausgebildet und es ist zumeist eine Mehrzahl derartiger Zyklone in Reihe geschaltet, um auf diese Weise einen Wärmetauscherstrang auszubilden. Die Temperatur der aus dem Zementklinkerofen abgezogenen heißen Gase wird hierbei stufenweise abgebaut, wobei die Zweigleitung jener Druckverluste in den einzelnen Stufen des Wärmetauscherstrangs nicht notwendigerweise an den letzten Wärmetauscher angeschlossen werden muss, sondern vielmehr auch bereits auf höherem Temperaturniveau eine Ausschleusung zulässt. Das Temperaturniveau wird jedenfalls so gewählt, dass davon ausgegangen werden kann, dass bei darunter liegenden Temperaturen eine Verbrennung von VOCs nicht mehr erfolgt und umgekehrt eine Freisetzung von VOCs ohne weiteres möglich ist. Dies gilt genaugenommen bei Temperaturen ≤ 300° C und entspricht zumeist der Temperatur der Abgase am Eingang der Vorerhitzer für das Rohmehl.

Eine Rückführung der den Wärmetauscher zur Dampferzeugung verlassenden Gasmenge kann bevorzugt zur Rohmehlmühle bzw. zur Mahltrocknungsanlage erfolgen. Die Ausbildung ist daher bevorzugt so getroffen, dass die Zweigleitung zwischen dem Vorerhitzer und einer Rohmehlmühle angeordnet ist.

Insgesamt wird durch die erfindungsgemäße Vorrichtung der Vorteil erreicht, dass auf eine unwirtschaftliche vollständige Nachverbrennung verzichtet werden kann und gleichzeitig die für die Nachverbrennung aufgewandte Energie optimal zur Dampferzeugung und zur Entspannung des Dampfes in einer Dampfturbine herangezogen werden kann. Es wird somit die latente Wärme der für die Verbrennung von VOCs auf entsprechend hohe Temperaturen von bis zu 900° C aufgewärmten Gase besser genutzt, sodass die Wirtschaftlichkeit des Gesamtverfahrens verbessert wird.

## Patentansprüche

1. Verfahren zum Entfernen von flüchtigen organischen Komponenten (VOC) aus Abgasen einer Zementklinkerofenanlage, bei welchem die weitgehend abgekühlten Abgase einer Nachverbrennung unterworfen werden, **dadurch gekennzeichnet, dass** eine Nachverbrennung in dem Ausmaß vorgenommen wird, welche eine Absenkung der Konzentration der VOC unter die zulässigen Grenzwerte sicherstellt, und dass die Nachverbrennung zur Dampferzeugung vorgenommen wird, wobei die Dampferzeugung in der Nachverbrennung auf ein nachzuverbrennendes Gasvolumen ausgelegt ist, welches sicherstellt, dass eine diesem Gasvolumen entsprechende Teilmenge des Abgases die Absenkung von in der Zeiteinheit emittierten VOC im Abgas unter die zulässigen Konzentrationswerte durch Verdünnung erzielen lässt und wobei diese Teilmenge gleichzeitig auf die Erzeugung einer für den wirtschaftlichen Betrieb einer bestimmten Dampfturbine ausreichende Dampfmenge ausgelegt ist.

2. Zementklinkerofenanlage mit einer Vorrichtung zum Entfernen von flüchtigen organischen Komponenten (VOC) aus Abgasen einer Zementklinkerofenanlage, wobei die Zementklinkerofenanlage einen Vorerhitzer und ein Abgassauggebläse aufweist, bei welchem eine weitgehend abgekühlte Teilmenge des Abgases einer Nachverbrennung unterworfen wird, **dadurch gekennzeichnet, dass** an die Abgasleitung der Zementklinkerofenanlage zwischen dem Vorerhitzer und dem Abgassauggebläse eine Zweigleitung angeschlossen ist, an welche eine Brennkammer für einen Wärmetauscher zur Dampferzeugung und eine Dampfturbine angeschlossen sind.

3. Zementklinkerofenanlage nach Anspruch 2, **dadurch gekennzeichnet, dass** die Zweigleitung zwischen dem Vorerhitzer und einer Rohmehlmühle angeordnet ist.

## Claims

1. Method for removing volatile organic components (VOC) from waste gases of a clinker installation in which the largely cooled waste gases are subjected to post-combustion, **characterized in that** the post-combustion is carried out in such a way as to ensure a reduction of the concentration of the VOC below the authorised threshold values and that the post-combustion is carried out in order to produce water vapour, whereby the creation of water vapour is dimensioned for a gas volume to be burned, ensuring that a partial quantity of the waste gas corresponding to the gas volume enables the reduction of emitted VOC in the waste gas below authorised concentration values per unit time by rarefaction and whereby this partial quantity is simultaneously dimensioned for the creation of a sufficient amount of water vapour for the economical operation of a determined steam turbine.

2. Clinker installation comprising a device for removing volatile organic components (VOC) from waste gases of a clinker installation, wherein the clinker installation comprises a precalciner and a waste gas suction fan in which part of the largely cooled waste gases are subjected to a post-combustion **characterized in that** a branch line is connected to the waste gas line of the clinker installation, between the pre-calciner and the waste gas suction fan, onto which a combustion chamber for a heat exchanger for producing water vapour and a steam turbine is connected.

3. Device according to claim 2, **characterized in that** the branch line is arranged between the pre-calciner and a raw meal mill.

## Revendications

1. Procédé pour éliminer des composants organiques volatils (VOC) contenus dans des gaz brûlés d'une installation de four à clinker de ciment, dans lequel les gaz brûlés, largement refroidis, sont soumis à une postcombustion, **caractérisé en ce qu'**une postcombustion est effectuée dans une mesure qui garantit un abaissement de la concentration en COV en dessous des valeurs limites admissibles, et **en ce que** la post-combustion est réalisée pour produire de la vapeur, la production de vapeur dans la postcombustion étant prévue pour un volume gazeux devant être soumis à la post-combustion qui garantit qu'une quantité partielle du gaz brûlé correspondant à ce volume gazeux permet d'obtenir, par raréfaction, l'abaissement des COV émis dans les gaz brûlés dans l'unité de temps en dessous des valeurs de concentration, et cette quantité partielle étant prévue simultanément pour la production d'une quantité de vapeur suffisante pour l'exploitation économique d'une turbine à vapeur déterminée.

2. Installation de four à clinker de ciment équipée d'un dispositif pour éliminer des composants organiques volatils (VOC) contenus dans des gaz brûlés d'une installation de four à clinker de ciment, l'installation de four à clinker de ciment comportant un préchauffeur et un ventilateur d'extraction de gaz brûlés, dans laquelle une quantité partielle, largement refroidie, de gaz brûlés est soumise à une post-combustion, **caractérisée en ce qu'**est raccordé à la conduite de gaz brûlés de l'installation de four à clinker de ciment, entre le préchauffeur et le ventilateur d'extraction de gaz brûlés, une conduite de dérivation à laquelle sont raccordées une chambre de combustion d'un échangeur de chaleur destiné à produire de la vapeur et une turbine à vapeur.

3. Installation de four à clinker de ciment, selon la revendication 2, **caractérisée en ce que** la conduite de dérivation est disposée entre le préchauffeur et un broyeur à farine crue.
